# EUROPEAN PATENT SPECIFICATION

(11) **EP 0 519 734 B1**
(45) Date of publication and mention of the grant of the patent: **16.04.1997**
(21) Application number: 92305636.0
(22) Date of filing: 19.06.1992
(51) Int. Cl.: C08G 18/08, C08G 18/42

(54) **Method of urethanating reaction**
Urethanisierungsreaktionsverfahren
Méthode pour la réaction d'uréthanisation

(30) Priority: 19.06.1991 JP 147305/91
(43) Date of publication of application: 23.12.1992
(73) Proprietor: MITSUI TOATSU CHEMICALS, Inc., Chiyoda-Ku Tokyo 100 (JP)
(72) Inventor: Shin, Masaaki, Fujisawa-shi, Kanagawa (JP); Misawa, Akira, Kamakura-shi, Kanagawa (JP); Kawabata, Toshihiko, Osaki-shi, Osaka (JP); Onofusa, Mitsuo, Naka-gun, Kanagawa (JP); Hisamatsu, Kazuo, Hiratsuka-shi, Kanagawa (JP); Kuge, Soshichi, Mobara-shi, Chiba (JP); Ikeda, Takayasu, Takaishi-shi, Osaka (JP); Kuwamoto, Hideharu, Kamakura-shi, Kanagawa (JP)
(74) Representative: Rackham, Anthony Charles

(56) References cited:
- EP-A- 0 012 413
- EP-A- 0 041 347
- EP-A- 0 375 321
- EP-A- 0 396 047
- EP-A- 0 417 581
- WO-A-91/00304

## Description

The present invention relates to a method of conducting a urethanating reaction for obtaining a highly viscous urethane-modified resin by continuously performing a reaction of a polyisocyanate compound with at least one highly reactive polyol. An example of such a urethane-modified resin is one used as a binder resin for an electrophotography toner and is formed by mixing at least one polyol having hydroxyl groups at the ends of the molecule with a polyisocyanate compound and then subjecting them to a urethanating reaction.

Until now, a variety of methods for preparing higher molecular weight, improved resins through the reaction of polyols and isocyanates have been proposed. For instance:
a) a method which comprises supplying, to an extruder, polyols in the form of fine powder when the polyols are solids, then melting the powder, adding isocyanate compounds to the molten polyols through a feed opening positioned in the middle of the extruder, allowing the reaction to proceed with stirring and mixing to thus recover reaction mixtures through the outlet of the extruder; and
b) a method which comprises introducing polyols into a tank, adding isocyanate compounds to the polyols and reacting these compounds while stirring and mixing.

The application of method a in which an extruder is employed is in general limited to powdery materials because of the structure of the extruder. In addition, a highly viscous material such as a polymer may be supplied to the extruder. In such a case, however, an extremely rapid temperature change cannot be allowed in the extruder in order to prevent heat degradation of the material to be processed along the feed direction and, therefore, the supply temperature of the materials must accordingly be close to the reaction temperature. In this case, the viscosity of the starting material is in general very much lower than that of the resulting resin discharged through the outlet of the extruder. This becomes a cause of a problem. For instance, if a starting material maintained at approximately the reaction temperature, i.e., a starting material having a low viscosity is fed to an extruder, a pressure difference is produced between the inlet and outlet of the extruder and it becomes difficult to feed the material by the screw or the solution of this problem requires the use of a very long apparatus.

Moreover, rapid mixing of starting materials is required at the initial stage of the urethanating reaction to ensure the homogeneity of the reaction mixture and accordingly, the screw of the extruder must be rotated at a high speed. On the other hand, the reaction product whose viscosity is increased due to the urethane-modification is necessarily rotated at a high speed at the latter period of the reaction. This requires the use of, for instance, a huge motor for driving the screw and huge reduction gears and the rotation of the screw at a high speed causes problems of, for instance, heat generation as well as deterioration of the resulting resin. In particular, if a further-reaction over a long time is required, it is inevitable to use a very long extruder and there arises various problems relating to production facilities.

The method b in which a reaction is performed in a tank has widely been used in, for instance, the polymerization of monomers, but the polymerization is limited to emulsion polymerization in which water is used as a polymerization medium for preventing an increase in the viscosity of the reaction system or solution polymerization in which a solvent is added and thus a complicated apparatus must be used. The amount of additives capable of being added to a product is not always consistent with the stirring and mixing abilities and heat conduction capacity of the apparatus. Therefore, a reaction in the tank is performed, for instance, in the presence of an excess solvent and then a further-treatment such as the removal of the excess solvent is required. This leads to an increase in the cost of equipment and operating cost.

Furthermore, in the usual systems in which the viscosity is low at the initial stage of the reaction and is extremely increases at the latter period of the reaction, the apparatus related to a batch type reactor must be provided with equipments capable of coping with either of these extremes. Thus, the method suffers from a variety of problems. For instance, complicated operation and handling are required, control accuracy is reduced and the product quality is likewise impaired.

Examples of some of these methods of preparing urethane modified polyester resins are given in EP-A-0 375 321.

Accordingly, it is an object of the present invention to provide a method for preparing a highly viscous urethane-modified resin which allows a continuous urethanating reaction irrespective of the difference in viscosity between the staring materials and the resulting product, which is excellent in running properties and controllability and which can provide products having good quality and high stability.

According to the present invention there is provided a method of subjecting at least one polyol (A) and a polyisocyanate compound (B) to a urethanating reaction to give a urethane-modified resin, which comprises mixing a third component (C) whose hydroxyl value is no more than 10 eq. KOH mg/g-resin with the polyol (A) or the polyisocyanate compound (B), continuously introducing the resulting mixture into a static mixer (I) free of stirring through an inlet thereof, continuously introducing the other of the polyol (A) or the polyisocyanate compound (B) into the apparatus, the amount of the polyisocyanate compound (B) corresponding to 0.3 to 1.5 mole eq. of isocyanate groups per mole of hydroxyl groups of the polyol (A), the temperature in the static mixer ranging from 90 to 200°C and advancing the urethanating reaction in the mixing apparatus and continuously discharging the urethane-modified resin.

According to another aspect of the present invention, there is provided a method of urethanating reaction which comprises the steps of transferring the reaction mixture formed in the static mixer (I) free of stirring to a further static mixer (II) free of stirring which is designed such that the flow linear velocity of the mixture is 1/5 to 1/100 time that in the static mixer (I) to perform a further-reaction.

According to a further aspect of the present invention, there is provided a method of urethanating reaction which comprises the step of transferring the reaction mixture obtained in the static mixer (I) or (II) free of stirring to a self-cleaning type kneader for fluids having high viscosity or a stirring bath provided with a built-in helical blade or double ribbon helical blade to perform a further-reaction over 1 to 20 hours.

In the present invention, the term "at least one polyol (A)" means one polyol selected from polyols detailed below or a mixture of at least two such polyols.

The polyols herein included, for instance, polyhydric alcohols having a valency of 2 to 4, polyether polyols, acryl polyols, polyester polyols and other polyols.

Specific examples of the polyhydric alcohols having a valency of 2 to 4 include ethylene glycol, diethylene glycol, triethylene glycol, propylene glycol, dipropylene glycol, 1,3-butylene glycol, 1,4-buylene glycol, 1,5-pentanediol, 1,6-hexanediol, neopentyl glycol, decamethylene glycol, 2,4,4-trimethyl-1,3-pentanediol, cyclohexanediol, cyclohexane dimethanol and xylylene diglycol.

Specific examples of the polyether polyols are those obtained by adding alkylene oxides such as ethylene oxide, propylene oxide, butylene oxide and styrene oxide to low molecular weight polyvalent active hydrogen-containing compounds such as ethylene glycol, propylene glycol, glycerin, pentaerythritol and aniline; and polytetramethylene ether glycols obtained through ring opening polymerization of tetrahydrofuran.

Specific examples of the acryl polyols can easily be obtained by reacting monomers (a) having hydroxyl groups such as hydroxyethyl (meth)acrylate, hydroxypropyl (meth)acrylate, 1,4-butanediol mono(meth)acrylate and polycaprolactone (meth) acrylate with monomers (b) free of hydroxyl group in the presence of a copolymerization catalyst.

In this respect, examples of the monomers (b) free of hydroxyl group herein usable include esters of (meth)acrylic acids such as methyl (meth)acrylate, ethyl (meth)acrylate, propyl (meth)acrylate, n-butyl (meth)acrylate, isobutyl (meth) acrylate, tert-butyl (meth)acrylate, 2-ethylhexyl (meth) acrylate, tridecyl (meth)acrylate, stearyl (meth)acrylate, cyclohexyl (meth)acrylate, benzyl (meth)acrylate and phenyl (meth)acrylate. In the foregoing "methyl (meth)acrylate", for instance, means methyl acrylate and methyl methacrylate.

Copolymerizable monomers (b) free of hydroxyl group usable in the invention further include, for instance, styrene, α -methylstyrene, vinyl toluene, acrylonitrile, methacrylonitrile, vinyl acetate, vinyl propionate, acrylamide, methacrylamide, vinyl chloride and α -olefins having 4 to 20 carbon atoms such as propylene and ethylene.

Typical examples of the copolymerization catalysts (initiators) include diazo compounds such as azobisisobutyronitrile; and peroxides such as benzoyl peroxide, tert-butyl pivalate, tert-butyl perbenzoate and tert-butyl percaprate.

Further, specific examples of the polyester polyols are those obtained by condensing di- to tri-basic acids such as maleic acid, fumaric acid, succinic acid, adipic acid, sebacic acid, azelaic acid, phthalic acid, isophthalic acid, terephthalic acid and trimellitic acid with polyhydric alcohols having a valency of 2 to 4 such as those listed above.

Examples of the polyhydric alcohols having a valency of 2 to 4 further include, in addition to those listed above,hydroxynonebis(hydroxyethyl ether), ethylene oxide adducts of bisphenol A, propylene oxide adducts of bisphenol A, hydrogenated bisphenol, trimethylolpropane, glycerin, 1,2,6-hexanetriol, pentaerythritol, sorbitol and castor oil.

It is also possible to use oil-modified polyester polyols obtained by incorporating higher fatty acids such as coconut oil fatty acid, linseed oil fatty acid, soybean oil fatty acid, cottonseed oil fatty acid, tung oil fatty acid and castor oil fatty acid into the foregoing 2- to 3-basic acids and the foregoing polyhydric alcohols having a valency of 2 to 4.

Examples of the polyisocyanate compounds (B) usable in the present invention are diisocyanate compounds such as tolylene diisocyanate, isophorone diisocyanate, hexamethylene diisocyanate, xylylene diisocyanate and diphenylmethane-4,4'-diisocyanate; isocyanurate derivatives derived from these diisocyanates; glycol adducts modified with a variety of polyols listed above; and water adducts.

A typical example of a static mixer free of stirring which can be used in the method of this invention is depicted in "A Manual of Chemical Engineering", Section 18·4 (Solid Mixing), p. 1349, Edited by Chemical Engineering Society Japan, 4th Revision (Maruzen Publishing Company). More specifically, the static mixer has a structure which comprises a transporting tube having plates for dividing and /or mixing the flow path positioned in the tube so as to promote the mixing by dividing a fluid into portions and combining the divided portions. The cross section of the tube is generally a circular form which is most suitable shape for mass flow, but may have a polygonal shape from the viewpoint of the shape of the mixing plate fitted thereto and the easiness of processing the same.

There have been known various kinds of static mixer free of stirring which are mainly classified depending on the shapes of mixing plates and manufactured and sold by a variety of makers and typical examples thereof include the Koch Sulzer Mixers such as SMX and SMXL types available from Sulzer Company (Switzerland) and the Kenics Mixers provided with a built-in rectangular twisted plate called "element" which serves to rotate a fluid at an angle of 180° either right or left direction and then oppositely rotate it at an angle of 180°, as depicted in the foregoing Manual. These static mixers have been used for mixing gases, liquids and powders, i.e., in operations requiring mixing such as dissolution, extraction and gas absorption depending on intended components. In most cases, these mixers have been used for mixing and stirring low viscosity substances (see, for instance, U.S. Patent No. 3,950,317).

Recently, these mixers have been used for mixing substances having intermediate viscosities. For instance, in the specific field such as expansion molding of urethane in which a reactive starting material is injected in a frame for molding, they have been used for initial mixing and stirring of intermediate viscosity-reactive substances (see, for instance, Japanese Unexamined Patent Publication No. Sho 60-105514 and Japanese Examined Patent Publication No. Hei 1-34539).

In these fields, however, these mixers are not used for carrying out a reaction, but for uniformly mixing substances, although a quite primary reaction is possibly caused to some extent.

The amount of the polyisocyanate compound (B) per mole of hydroxyl group of the polyol (A) should be determined depending on the properties of the intended urethanated resin to be formed. For instance, the amount suitably ranges from 0.3 to 1.5 mole eq. for toner binder resin for electrophotography. This is because, if it is less than 0.3 mole eq., the resulting urethane-modified resin has an insufficient molecular weight and accordingly resistance to offset is insufficient when it is used as a binder resin for toners, although any problem concerning the operation in the reaction of the present invention does not arise. On the other hand, if it exceeds 1.5 mole eq., unreacted isocyanate still remains in the product discharged through the outlet of the static mixer (J). For instance, a variety of problems arise due to the remaining unreacted isocyanate, when the product is cooled at the outlet of the mixer. In addition, when the product discharged from the outlet is further heated, the product undergoes a crosslinking reaction and this renders the product highly viscous and correspondingly, a large quantity of energy is required for fluidizing the product. Moreover, a high pressure must be applied to a piping system and the use of huge facilities are required. If the product is heated to a higher temperature to solve the foregoing problems, the resin is conversely deteriorated.

The static mixer is maintained at a temperature ranging from 90 to 200°C. In conventional mixing methods free of stirring, substances to be mixed are in general mixed at a high speed and a temperature of not more than the reaction temperature and discharged within a short time period, while in the method of the present invention, the substances are mixed at a temperature higher than that used in the conventional method. If the temperature of the mixing apparatus is less than 90°C, it takes a long time for completing the reaction and so one needs to use a very long static mixer (I). Simultaneously this leads to the formation of a product having a high viscosity since the temperature is low. This leads to a substantial increase in the motive power for feeding starting materials. On the other hand, if the temperature is higher than 200°C, the resulting resin is severely deteriorated.

The static mixer used in the present invention must be equipped with a large number of mixing elements sufficient to mix desired amounts of the polyol (A) and polyisocyanate (B) and must have an effective reaction volume sufficient to ensure a reaction time required for achieving a desired degree of urethanation.

The method of invention can be applied to cases wherein the polyisocyanate compound (B) is used in a high content, has a molecular weight of less than 400 and a modified resin having a very high molecular weight through an urethanating reaction is obtained. This is because the addition of the third component can eliminate any possible pressure variation within the static mixer (I) depending on the reaction conditions and can ensure stable operation over an extended period of time.

Typical examples of the third component (C) which are usable in the present invention included plasticizers for resins, for instance, phthalates such as dibutyl phthalate and dioctyl phthalate; fatty acid esters obtained by reacting fatty acids hacing 6 to 8 carbon atoms with alcohols such as ethylene glycol and triethylene glycol; phosphoric acid esters such as trioctyl phosphate; and polyesters having a molecular weight ranging from 1,000 to 10,000 obtained through the reaction of di- or tri-hydric alcohols such as ethylene glycol and diethylene glycol with acids such as succinic acid and adipic acid.

Examples of the third component (C) further include vinyl polymers with those having a number-average molecular weight ranging from 1,000 to 10,000 obtained by polymerizing vinyl monomers being preferred. They can generally be obtained through, for instance, bulk polymerization, solution polymerization, suspension polymerization and emulsion polymerization.

Examples of vinyl monomers herein include aromatic vinyl compounds such as styrene and α -methylstyrene; (meth) acrylic acid and esters thereof such as methyl acrylate, ethyl acrylate, propyl acrylate, isopropyl acrylate, butyl acrylate, isobutyl acrylate, cyclohexyl acrylate, 2-ethylhexyl acrylate, stearyl acrylate, lauryl acrylate, methyl methacrylate, ethyl methacrylate, propyl methacrylate, isopropyl methacrylate, butyl methacrylate, isobutyl methacrylate, cyclohexyl methacrylate, 2-ethylhexyl methacrylate, stearyl methacrylate, lauryl methacrylate, acrylic acid, methacrylic acid, 2-hydroxyethyl acrylate and 2-hydroxyethyl methacrylate; acrylonitrile, vinyl chloride, vinyl acetate, vinyl propionate, methacrylonitrile, acrylamide and methacrylamide.

If the number-average molecular weight of the polymers exceeds 10,000, the viscosity of the reaction system is too high even at the reaction temperature and sufficiently uniform mixing cannot be ensured, while if it is less than 1,000, the urethanating reaction-delay effect is lowered in particular when the added amount thereof is low.

Moreover, the third component (C) include solvents per se such as xylene and toluene for dissolving the polyols and/or the third component (C) in order to subject them to the urethanating reaction. The third component (C) may comprise, for instance, a stabilizer for polyvinyl chloride, an antioxidant and a UV absorber commonly used as molding aids for resins.

The amount of the third component (C) suitably ranges from 5 to 90% by weight and in particular 10% by weight or higher with respect to the polyol component (A). When a solvent such as xylene or toluene is used as the third component, it is desirably used in an amount of 30% by weight or higher.

The mixing of the foregoing components are, for instance, carried out by mixing a polyisocyanate (B) with a mixture of 10% by weight high molecular weight third component (C) having a number-average molecular weight of about 10,000 and 10% by weight of xylene, and then the resulting mixture is reacted with a polyol (A).

The third component (C) must have a hydroxyl value (eq. KOH mg/g-resin) of not more than 10. This is because, if the third component is an ester, the ester prepared from an acid and an alcohol possibly has remaining acid or hydroxyl groups depending on the mixing ratio of the starting materials and the reaction conditions and the remaining groups undergo a reaction with the polyisocyanate compound. Thus, if the hydroxyl value thereof is greater than 10, the effect of delaying the reaction between the polyisocyanate compound (B) and the polyol component (A) is lowered, and a non-uniform urethanating reaction rapidly proceeds before the starting materials are sufficiently mixed and as a result the reaction product blocks the static mixer (I) and thus the reaction does not continuously proceed.

The appropriate weight ratio of the third component (C) to the polyol (A) ranges from 95:5 to 10:90 and in particular good results can be obtained when a large amount of the third component (C) is used (90:10 or higher).

According to one embodiment of the present invention the method further comprises transferring the reaction mixture from the said static mixer to a further static mixer (II) free of stirring such that the flow linear velocity of the mixture in the further static mixer (II) is 1/5 to 1/100 time that used in the said static mixer (I) to perform a further-reaction.

This further reaction may proceed for 5 minutes to 3 hours. In this method, the static mixer (II) may be one of those listed above in connection with the static mixer (I).

The term "flow velocity of the mixture" herein used is defined to be the feed volume of the mixture per unit time divided by the averaged cross sectional area of the mixer. Experimental results obtained by the inventors indicate that the reaction mixture should be transferred from the mixer (I) to the mixer (II) at an instance when the conversion of the urethanating reaction (U: based on the reactive hydroxyl group) reaches at least 50%. The conversion of urethanating reaction U is defined as follows:

U =([-OH]₀ - [-OH]) / [-OH]₀

or

([-NCO]₀ - [-NCO]) / [-NCO]₀

wherein [-OH]₀ and [-NCO]₀ are the molar numbers of the reactive hydroxyl groups and isoyanate groups at the time of charging of the starting materials respectively, [-OH] is the molar number of reacted hydroxyl groups and [-NCO] is the molar number of isocyanate groups consumed during the reaction. This is because the viscosity of the reaction mixture is rapidly increased when the conversion reaches 50% as compared with the viscosity of the starting materials for the urethanation, and a loss in pressure for fluidization accordingly increases. Therefore, if the mixture whose rate of reaction is less than 50% is transferred to the mixer (II), a gel-like resin is often deposited on the mixer near the inlet thereof and this leads to a reduction of the stable and long term operation of the facilities and the formation of a product having non-uniform properties.

When a product is prepared by simply using the mixer (I) according to the present invention, the amount of the polyisocyanate particularly preferably ranges from 0.3 to 1.2 mole eq. of isocyanate groups. In this case, almost all of the hydroxyl groups present in the polyol (A) can be reacted. Moreover, if the added amount of the polyisocyanate is more than about 0.8 mole eq. and not more than 1.5 mole eq. of isocyanate groups, it is particularly preferred to transfer the reaction mixture from the mixer (I) to the mixer (II) when the rate of reaction of the polyol (A) based on the hydroxyl groups reaches not less than 50% and not more than 80%.

At the latter period of the urethanating reaction in the present invention, the fluid viscosity is more than several tens times the initial viscosity and further increased to several hundreds times the initial viscosity when the rate of reaction is not less than 90%. When the further-reaction is continued by increasing the added amount of polyisocyanates, the viscosity is further increased, but the reaction can further be continued by controlling the flow linear velocity of the mixture in the mixer (II) to 1/5 to 1/100 time that in the mixer (I).

The static mixer (II) can be maintained at any temperature within the range of from 90 to 200°C which is selected depending on the relation between the reaction time and the loss in pressure for fluidization and the conditions for the facilities and the temperature thereof may be higher or lower than that of the mixer (I). The connection between the mixers (I) and (II) preferably has a tubular structure in which the cross section thereof gradually increases for the purpose of preventing retention of the mixture in the connection. The connection may be provided with a dispersing plate or an intermediate mixing apparatus free of stirring for making the flow of the mixture in the connection uniform and for changing the temperature of the fluid, but if the flow linear velocity of the mixture in the mixer (II) is controlled to less than 1/100 time that in the static mixer (I), it is liable to cause deflection and a fluid temperature distribution is established. The quality of the resulting product is correspondingly impaired.

The retention time of the reaction mixture in the static mixer (II) can be selected depending on the properties to be imparted to the resulting products on the basis of the degree of reaction in the mixer (I) and the viscosity at the outlet of the mixer. However, if the polyisocyanate principally takes part in the urethanating reaction and the added amount of the third component (C) ranges from 10 to 20 parts by weight, the retention time preferably ranges from about 5 minutes to about one hour. If the added amount of the third component (C) exceeds 20 parts by weight, the amount of polyisocyanate is not less than 1 mole eq. or higher expressed in terms of the amount of isocyanate groups with respect to the hydroxyl groups of the polyol (A) and it is intended to obtain a product having a high viscosity, the upper limit of the retention time is preferably 5 hours. There are some cases which require properties modification by a further-reaction over 5 hours to impart desired properties to the resulting resin, but the further-reaction in the static mixer (II) over a long time is not industrially preferred from the viewpoint of loss in pressure for fluidization, since in such case, the viscosity of the reaction mixture exceeds at least 1,000 poises according to the studies of the inventors extending over a wide area.

According to another embodiment of the present invention, the method comprises passing from the static mixer (I) or (II) into a self-cleaning reactor (kneader) for high viscosity fluids or a stirring bath equipped with a built-in helical blade or a double ribbon helical blade to carry out further reaction which may be over a period of 1 to 20 hours.

The foregoing "kneader" is an apparatus for intensively kneading a substance having a high viscosity and may be a continuous or batchwise apparatus. Typical examples thereof include a multiple screw extruder, a co-kneader and a double-armed kneader (see, for instance, U.S. Patent Nos. 3,642,964; 4,245,081; and 4,261,946). The self-cleaning kneader comprises a screw, arm or blade coming in close contact with the wall of a container body to which contents of the kneader are adhered. The deposits formed on the wall are scraped off by the screw, arm or blade per se or the wall surfaces or projections thereof to thus make the wall surface clean. Thus, the apparatus is excellent in mixing high viscosity substances and has an excellent ability of making the retenion time uniform.

The foregoing kneader is variously modified by a variety of makers, but in the present invention any kneaders of this type can be used so far as they can heat and/or cool the contents to a temperature ranging from 90 to 200 °C, with the multiple screw extruder being particularly preferred.

On the other hand, the stirring baths provided with helical blades or double ribbon helical blades have a low self-cleaning ability, but have a simple structure as compared with other means such as screw extruders and thus the internal effective volume of the bath can be increased. For this reason, the heating and retention time ranging from 5 minutes to 20 hours can be ensured as in the further-reaction of the present invention. In addition, a high driving force is required if the inner diameter of the stirring bath is enlarged, but this can be solved by designing the bath such that it has a longitudinally extended shape.

When the stirring bath is used, the viscosity of the reaction mixture is not more than 400,000 poises at the further-reaction temperature and in particular 100,000 poises or lower. If it is higher than 100,000 poises, a high driving power must be used for stirring and the self-cleaning ability of the stirring bath is lowered. Moreover, if it is higher than 400,000 poises, the uniformity of the resulting product is impaired.

The method according to the present invention will hereinafter be explained in more detail with reference to the following Examples and Comparative Examples.

### Examples 1 to 4

Polyhydric alcohols and polybasic acids were subjected to dehydration polymerization in the presence of 0.05% by weight dibutyl tin oxide as a dehydration catalyst in mixing ratios listed in the following Table 1 to give polyols (A1 to A4). Separately, polyhydric alcohols and polybasic acids were subjected to dehydration polymerization, in the same manner used above, in mixing ratios listed in the following Table 2 to give third components (C1 to C4) having remaining hydroxyl groups corresponding to OH values (mg KOH/g-resin) of not more than 1.

The polyols (A1 to A4) listed in Table 1 and the third components (C1 to C4) were introduced into a mixer (I) by a gear pump through tanks maintained at approximately the reaction temperature in amounts (part by weight) listed in Table 3 and then sufficiently mixed, the mixer (I) being free of stirring, used for mixing resins and provided with, at the center of the flow path on the inlet side, a fine tube for introducing a polyisocyanate as shown in Table 3. Thereafter, the polyisocyanate was introduced to perform an urethanating reaction in the mixer (I) free of stirring. The resin discharged through the outlet of the mixer was divided into portions (about 500 g each), allowed to cool and solidified and then pulverized to give samples for analysis.

The details of the conditions for production and physical properties of the resulting urethane-modified resins are summarized in Table 3. The reactions were continued over 8 hours. It was observed that the pressure at the outlet of the gear pump was constant and vibrated only slightly. IR spectroscopic analysis of these samples indicates that a small amount of unreacted -NCO groups was still present in the sample of Example 4, but -NCO groups were not detected in the samples of Examples 1 to 3.

**Table 1:**

| Polyol Polymer (A) | | | | |
|---|---|---|---|---|
| Polyol | A1 | A2 | A3 | A4 |
| KB-300K *1) | 454 | 482 | 464 | 566 |
| Diethylene glycol | 140 | -- | 143 | 171 |
| 1,6-Hexanediol | -- | 165 | -- | -- |
| Trimethylolpropane | -- | -- | -- | 4.4 |
| Isophthalic acid | 398 | 23 *3) | -- | 4.4 *3) |
| Terephthalic acid | -- | -- | 407 | -- |

| Results of Polymerization | | | | |
|---|---|---|---|---|
| Amount of Dehydration (part) | 86 | 92 | 88 | 108 |
| Hydroxyl Value | 30 | 29 | 30 | 30 |
| Number-average Molecular Weight *2) | 6300 | 6200 | 6300 | 6400 |

| | | | | |
|---|---|---|---|---|
| *1) Bisphenol A/(2,2')-propylene oxide adduct (available from Mitsui Toatsu Chemicals, Inc.). | | | | |
| *2) The number-average molecular weight was determined by gel permeation chromatography using an eluent, with a monodispersed standard polystyrene being used as a standard. | | | | |
| *3) wrong values | | | | |

**Table 2:**

| Third Component (C) | | | | |
|---|---|---|---|---|
| Third Component (C) | C1 | C2 | C3 | C4 |
| Starting Materials | | | | |
| KB-300K (part) | 1376 | 1307 | 1342 | 1445 |
| Terephthalic acid (part) | 930 | 883 | 777 | 802 |

| Results | | | | |
|---|---|---|---|---|
| Amount of Dehydration (part) | 144 | 137 | 140 | 151 |
| Number-average Molecular Weight | 1100 | 2200 | 3200 | 3800 |

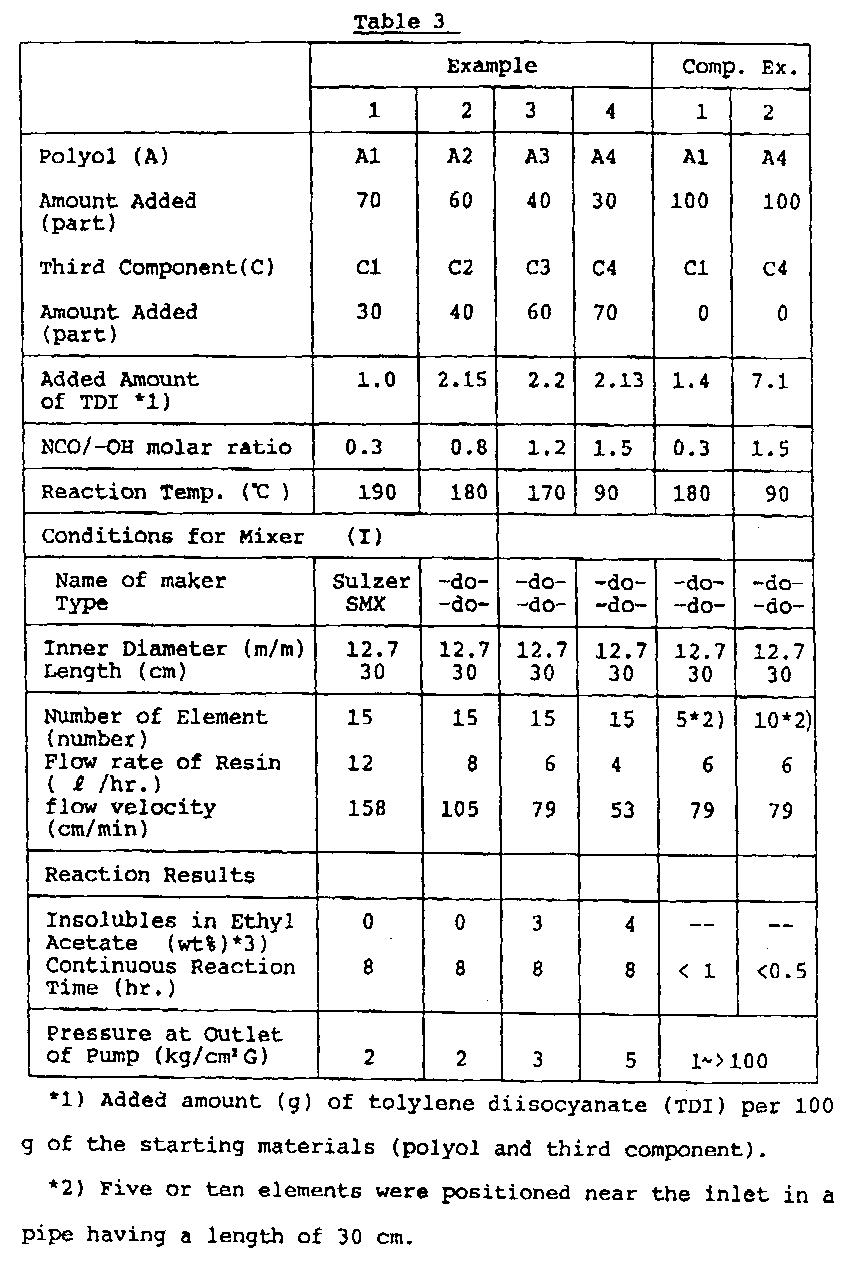

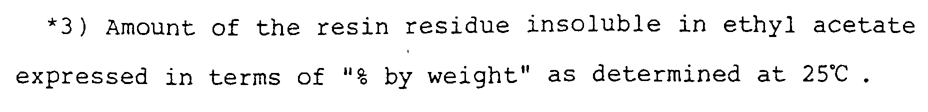

### Comparative Examples 1 and 2

Comparative Examples were carried out in the -same manner as in Examples 1 to 4 except that the addition of the third component (C) was omitted. The results obtained are listed in Table 3.

One minute after the initiation of the experiments, the read of a manometer repeatedly vibrated vigorously and irregularly and the average-internal pressure was gradually increased. The pressure exceeded 40 kg/cm²G after one hour in Comparative Example 1 and after 30 minutes in Comparative Example 2 and an instantaneous value of the pressure vibration exceeded 100 kg/cm²G. Therefore, these experiments were given up. When the elements of the mixer were washed with a solvent, it was found that insoluble resin residues were adhered to the elements so that the interstices of the elements were partially blocked. On the other hand, in Examples 1 to 4, any insolubles were not detected on the element surface.

### Examples 5 to 7

A mixer (II) free of stirring as detailed in Table 4 was connected to the facilities used in Examples 3 and 4 to perform a further-reaction. In Example 5, there was used SMXL Type Mixer available from Sulzer Company having a nominal diameter of 3 inches (76.2 mm). The further-reaction time could be sufficiently ensured by controlling the ratio of flow velocity in the mixer (II) to that in the mixer (I) at 1/43 and the viscosity of the resin at the outlet was about 800,000 poises, but the pressure at the outlet of a pump was only 27 kg/cm²G. Moreover, in Example 5, the insolubles in ethyl acetate could be increased from 3% observed in Example 3 to 8%.

In Examples 6 and 7, the modified resin obtained in Example 4 was subjected to a further-reaction and mixers having nominal diameters of 2·1/2 (63.5 mm) and 1·1/2 inch (38.1 mm) available from Noritake Company Ltd. were used. The further-reaction time could be sufficiently ensured by controlling the ratios of flow velocity in the mixer (II) to that in the mixer (I) at 1/27 and 1/11, respectively and thus products having high viscosity could be obtained. Insolubles in ethyl acetate could be increased to at least two times that observed in Example 4.

### Comparative Example 3

A mixer (II) having the same diameter and a length of 60 cm was connected to the outlet of the mixer (I) used in the facilities of Example 3 to perform a further-reaction under conditions listed in Table 4. Immediately after the addition of an isocyanate to the mixer (I), the pressure at the outlet of the pump was gradually increased, then abruptly increased to 200 kg/cm²G or higher and thus the reaction was interrupted. It was confirmed that the further-reaction could not be continued over one minute in the mixer (II) having the same diameter as that of the mixer (I).

### Comparative Example 4

A mixer (II) having a nominal diameter of 1 inch (25.4 mm) was connected to the outlet of the mixer (I) used in the facilities of Example 4 to perform a further-reaction under conditions listed in Table 4. The flow velocity ratio was 1/4.6 and correspondingly the reaction time was assumed to be 3 to 4 minutes, but the pressure at the outlet of the pump exceeded the upper limit of a manometer, 200 kg/cm²G, and thus the reaction was interrupted. Subsequent examination indicates that there was a leakage of the resin through a part of the flange joint portion. Thus, there would be a fear of breakage of the facilities.

**Table 4**

| | Ex.5 | Ex.6 | Ex.7 | Comp.3 | Comp.4 |
|---|---|---|---|---|---|
| Example No. of Urethanating Reaction | Ex.3 | Ex.4 | Ex.4 | Ex.3 | Ex.4 |
| Further-reaction Temp.(°C) | 150 | 140 | 140 | 150 | 140 |
| Mixer(II) Maker (**) | Sulz | Nori | Nori | Sulz. | Nori. |
| | | | | | |
| Type | SMXL | N10 | N10 | SMX | N10 |
| Inner Diameter (m/m) | 83 | 66 | 41.2 | 12.7 | 27.2 |
| Length (cm) | 190 | 320 | 160 | 60 | 39 |
| Number of Elements | 6 | 30 | 24 | 30 | 9 |
| Resin Flow Rate (L/hr) | 6 | 4 | 4 | 6 | 4 |
| Flow Velocity (cm/min) | 18.5 | 1.95 | 5 | 79 | 11.5 |
| Flow Velocity Ratio (II)/(I) | 1/43 | 1/27 | 1/11 | 1/1 | 1/4.6 |
| | | | | | |
| Further-reaction time (min) | 103 | 164 | 32 | 0.8 | 3.4 |
| | | | | | |
| Pressure at Outlet of Pump (kg/cm²G) | 27 | 21 | 53 | >200 | >200 |
| Insolubles in Ethyl Acetate (wt%)*1) | 8 | 13 | 9 | -- | -- |

| | | | | | |
|---|---|---|---|---|---|
| *1) The amount (% by weight) of the resin residues insoluble in ethyl acetate as determined at 25 °C. | | | | | |
| **: Sulz. and Nori. represent the Sulzer Mixer and a Mixer available from Noritake Company. Ltd. respectively. | | | | | |

### Example 8

The urethane resin prepared in Example 1 was air-cooled to about 150°C at the outlet of the mixer (I) and directly fed, in the molten state, to a double screw extruder (TEX-30; available from The Japan Steel Works, Ltd.) through a port for powder supply thereof. Since the resin had a sufficiently high viscosity, the screw exhibited a sufficient resin-biting ability and the resin did not cause overflow through the supply port even if the flow rate of the resin was adjusted to 12 l/h. When a molten resin and an isocyanate were fed directly to a double screw extruder without using a mixer (I) to perform a reaction at a desired reaction temperature, the viscosity of the starting materials was substantially lower than that of the resulting resin. Therefore, the resin could not continuously be supplied at a flow rate of 12 l/h and the resin caused overflow through the supply port. This was because the difference in resin viscosity between the inlet and the outlet was extremely high and a sufficient pressure could not be maintained at the supply port although the internal pressure at the outlet of the extruder. On the other hand, the resin used in this Example had a sufficiently high viscosity and accordingly a quantitative supply of the resin could be ensured.

An amount of 3.2% by weight TDI was additionally introduced into the foregoing molten resin supplied to the double screw extruder using a plunger pump. The addition thereof was performed at the position of a feed screw of the second barrel on the upstream, among 8 barrels in all, and all of the barrels were maintained at 135°C.

The retention time of the resin within the extruder was not always clear, but the time for the further-reaction was from 6 to 7 minutes at the average. The resinous reaction product was collected in masses (about 3 kg each), finely pulverized and then analyzed. Products having insolubles in ethyl acetate of 19% by weight were stably obtained.

### Example 9

A reactor provided with a double helical stirring blade was prepared by fitting a jacket to the outside of a stainless steel pipe having a nominal diameter of 8 inches (203,2 mm) and a length of 120 cm and mounting an electric motor of 0.75 kw equipped with reduction gears on an upper flange portion. More specifically, the blade had a 8-pitch helical form and had an outer diameter of 190 mm, a coil pitch of 120 mm and a width of 20 mm. The driving shaft having a diameter of 50 mm was cross-shaped on the portion thereof above the liquid level and passed through each helical ribbon at positions where each ribbon was peripherally divided into four to give an integrated blade structure. In other words, the reactor had no shaft at the center of a liquid and thus had a structure free of the deposition and retention of high viscous resin.

A gear pump was connected to the reactor at the lower portion thereof to withdraw the resulting resin. The modified resin obtained according to Example 3 and discharged from the mixer (I) free of stirring was introduced into the foregoing reactor equipped with a stirring blade and subjected to a further-reaction at a jacket temperature of 150°C. The inner volume was always controlled to 30 l and the number of revolution of the blade was set to 1 rpm. The average retention time was 5 hours. The resin obtained in this Example was cooled by a cooling rolls positioned at the outlet of the foregoing gear pump to approximately room temperature to solidify the resin and then pulverized to give a sample for testing. As a result, it was found that the insolubles in ethyl acetate was increased to 12% by weight. It is clear that the further-reaction substantially proceeded to a level higher than that achieved in Example 3.

### Example of Application

To a Henschel mixer, there were added 6 part by weight of carbon black MA-100 (available from Mitsubishi Chemical Industries Ltd.), 2 parts by weight of Spiron Black TRH (available from Hodogaya Chemical Co., Ltd.) as an antistatic agent and 2 parts by weight of polypropylene wax Biscol 550P (available from Sanyo Chemical Industries, Ltd.) per 100 parts by weight of the urethanated resin obtained in Example 5 to disperse and mix these ingredients and then the mixture was molten and mixed at 160 °C in a double screw kneader PCM 80 (available from Ikegai Corporation) to give a bulk toner composition. The resulting toner composition was roughly pulverized in a hammer mill, then finely pulverized in a jet pulverizer (IDS 2 Type; available from Nippon Pneumatic Co., Ltd.) and then subjected to air flow classification to give toner particles having an average particle size of 10 µ (3% by weight: ≦ 5 µ ; 2% by weight: ≧ 20µ ). An amount of 100 parts by weight of the toner was admixed with 1 part by weight of hydrophobic Silica Aerosil R 972 (available from Nippon Aerosil Co., Ltd.) to give a developer.

A reproduction test was performed at room temperature and a relative humidity of 50% using a commercially available non-magnetic laser beam printer (LP 3000; available from Seiko-Epson Co., Ltd.) to evaluate the resistance to development sleeve contamination during printing and stability of image density. As a result, it was found that good images having excellent durability and density stability can be obtained through the use of the resin prepared by the present invention and that the toner is almost comparable to those commercially available.

## Claims

1. A method of subjecting at least one polyol (A) and a polyisocyanate compound (B) to a urethanating reaction to give a urethane-modified resin, which comprises mixing a third component (C) whose hydroxyl value is not more than 10 eq. KOH mg/g-resin with the polyol (A) or the polyisocyanate compound (B), continuously introducing the resulting mixture into a static mixer (I) free of stirring through an inlet thereof, continuously introducing the other of the polyol (A) or the polyisocyanate compound (B) into the apparatus, the amount of the polyisocyanate compound (B) corresponding to 0.3 to 1.5 mole eq. of isocyanate groups per mole of hydroxyl groups of the polyol (A), the temperature in the static mixer (I) ranging from 90 to 200°C and advancing the urethanating reaction in the mixing apparatus and continuously discharging the urethane-modified resin.

2. A method as claimed in Claim 1 in which the polyisocyanate compound (B) is added in an amount corresponding to 0.3 to 1.2 mole eq. of isocyanate groups per mole of hydroxyl groups of the polyol (A).

3. A method as claimed in Claim 1 or Claim 2 in which the third component (C) is a fatty acid ester, phosphoric acid ester, polyester having a molecular weight ranging from 1,000 to 10,000 or a vinyl polymer having a molecular weight ranging from 1,000 to 10,000.

4. A method as claimed in any preceding claim in which the weight ratio of the third component (C) to the polyol (A) ranges from 95:5 to 10:90.

5. A method as claimed in any preceding claim which further comprises transferring the reaction mixture from the said static mixer to a further static mixer (II) free of stirring such that the flow linear velocity of the mixture in the further static mixer (II) is 1/5 to 1/100 time that used in the said static mixer (I) to perform a further-reaction.

6. A method as claimed in Claim 5 in which the added amount of polyisocyanate compound (B) ranges from 0.8 mole eq. to 1.5 mole eq. expressed in terms of the quantity of polyisocyanate groups per mole of hydroxyl groups of the polyol (A) and the reaction mixture is transferred to the further static mixer (II) at the point where the conversion of the urethanating reaction reaches 50 to 80%.

7. A method as claimed in any preceding claim further comprising transferring the resulting reaction mixture to a self-cleaning kneader for high viscosity fluid or a stirring bath provided with a built-in helical blade or double ribbon helical blade to perform further reaction.

## Patentansprüche

1. Verfahren zum Unterwerfen von wenigstens einem Polyol (A) und einer Polyisocyanatverbindung (B) einer Urethanisierungsreaktion zur Herstellung eines Urethan-modifizierten Harzes, gekennzeichnet durch Vermischen einer dritten Komponente (C), deren Hydroxylzahl nicht mehr als 10 Äqu. KOH mg/g-Harz beträgt, mit dem Polyol (A) oder der Polyisocyanatverbindung (B), kontinuierliche Einführung des erhaltenen Gemisches über einen Einlaß in einen nicht rührenden statischen Mischer (I), kontinuierliche Einführung der anderen Komponente, Polyol (A) oder Polyisocyanatverbindung (B), in die Vorrichtung, wobei die Menge der Polyisocyanatverbindung (B) 0,3 bis 1,5 Mol-Äqu. der Isocyanatgruppen pro Mol der Hydroxylgruppen des Polyols (A) entspricht, wobei die Temperatur in dem statischen Mischer (I) im Bereich von 90 bis 200 °C liegt, und Fortführung der Urethanisierungsreaktion in der Mischvorrichtung und kontinuierlicher Austrag des Urethan-modifizierten Harzes.

2. Verfahren nach Anspruch 1, worin die Polyisocyanatverbindung (B) in einer Menge zugegeben wird, die 0,3 bis 1,2 Mol-Äqu. der Isocyanatgruppen pro Mol der Hydroxylgruppen des Polyols (A) entspricht.

3. Verfahren nach Anspruch 1 oder 2, worin die dritte Komponente (C) ein Fettsäureester, ein Phosphorsäureester, ein Polyester mit einem Molekulargewicht im Bereich von 1000 bis 10000 oder ein Vinylpolymeres mit einem Molekulargewicht im Bereich von 1000 bis 10000 ist.

4. Verfahren nach einem der vorangegangenen Ansprüche, worin das Gewichtsverhältnis der dritten Komponente (C) zu dem Polyol (A) im Bereich von 95 : 5 bis 10 : 90 liegt.

5. Verfahren nach einem der vorangegangenen Ansprüche, das weiterhin umfaßt die Überführung des Reaktionsgemisches aus dem statischen Mischer in einen weiteren nicht rührenden statischen Mischer (II), so daß die lineare Fließgeschwindigkeit des Gemisches in dem weiteren statischen Mischer (II) 1/5 bis 1/100 von der beträgt, die in dem statischen Mischer (I) angewandt wird, um eine Weiterreaktion zu bewirken.

6. Verfahren nach Anspruch 5, worin die zugegebene Menge der Polyisocyanatverbindung (B) im Bereich von 0,8 Mol-Äqu. bis 1,5 Mol-Äqu. liegt, ausgedrückt als Menge der Polyisocyanatgruppen pro Mol der Hydroxylgruppen des Polyols (A), und das Reaktionsgemisch in den weiteren statischen Mischer (II) an den Punkt überführt wird, wo die Umwandlung der Urethanisierungsreaktion 50 bis 80 % erreicht.

7. Verfahren nach einem der vorangegangenen Ansprüche, das weiterhin umfaßt die Überführung des erhaltenen Reaktionsgemisches in einen selbstreinigenden Kneter für hochviskose Fluids oder in ein Rührbad, das mit einem eingebauten gewundenen Blatt oder gewundenen Doppelbandblatt versehen ist, um die weitere Reaktion durchzuführen.

## Revendications

1. Méthode dans laquelle on soumet au moins un polyol (A) et un polyisocyanate (B) à une réaction d'uréthannisation pour donner une résine modifiée par des groupes uréthannes, qui comprend le mélange d'un troisième composant (C) dont l'indice d'hydroxyle n'est pas supérieur à 10 mg d'équivalents de KOH par g de résine avec le polyol (A) ou le polyisocyanate (B), l'introduction en continu du mélange obtenu dans un mélangeur statique (I) dépouvu d'agitation par son admission, l'introduction en continu de l'autre parmi le polyol (A) ou le polyisocyanate (B) dans l'appareil, la quantité de polyisocyanate (B) correspondant à 0,3 à 1,5 équivalent molaire de groupes isocyanates par mole de groupes hydroxyle du polyol (A), la température dans le mélangeur statique (I) allant de 90 à 200°C et la réalisation de la réaction d'uréthannisation dans l'appareil de mélange et la récupération en continu de la résine modifiée par des groupes uréthannes.

2. Méthode selon la revendication 1 dans laquelle le polyisocyanate (B) est ajouté en une quantité correspondant à 0,3 à 1,2 équivalent molaire de groupes isocyanates par mole de groupes hydroxyle du polyol (A).

3. Méthode selon la revendication 1 ou la revendication 2, dans laquelle le troisième composant (C) est un ester d'acide gras, un ester d'acide phosphorique, un polyester ayant une masse moléculaire située entre 1 000 et 10 000 ou un polymère vinylique ayant une masse moléculaire située entre 1 000 et 10 000.

4. Méthode selon une quelconque des revendications qui précèdent, dans laquelle le rapport pondéral du troisième composant (C) au polyol (A) se situe entre 95:5 et 10:90.

5. Méthode selon une quelconque des revendications qui précèdent, qui comprend en outre le transfert du mélange réactionnel dudit mélangeur statique à un autre mélangeur statique (II) dépourvu d'agitation, de telle sorte que la vitesse linéaire d'écoulement du mélange dans l'autre mélangeur statique (II) soit égale à 1/5 à 1/100 fois celle utilisée dans ledit mélangeur statique (I) pour réaliser une réaction ultérieure.

6. Méthode selon la revendication 5, dans laquelle la quantité de polyisocyanate (B) ajouté, exprimée en termes de quantités de groupes polyisocyanate par mole de groupes hydroxyle de polyol (A), va de 0,8 équivalent molaire à 1,5 équivalent molaire, et dans laquelle le mélange réactionnel est transféré dans l'autre mélangeur statique (II) au moment où le taux de conversion de la réaction d'uréthannisation atteint 50 à 80 %.

7. Méthode selon une quelconque des revendications qui précèdent, comprenant en outre le transfert du mélange réactionnel obtenu dans un malaxeur auto-nettoyant pour fluide très visqueux ou dans un bain d'agitation muni d'une lame hélicoïdale ou d'une lame hélicoïdale à double enroulement intégrée pour réaliser une réaction ultérieure.
